# FASCICULE DE BREVET EUROPEEN

(11) **EP 4 334 575 B1**
(45) Date de publication et mention de la délivrance du brevet: **04.06.2025**
(21) Numéro de dépôt: 22725906.6
(22) Date de dépôt: 03.05.2022
(51) Int. Cl.: F01K 7/22, F01K 13/02, F22B 1/18

(54) **CENTRALE THERMIQUE AMÉLIORÉE**
VERBESSERTES WÄRMEKRAFTWERK
IMPROVED THERMAL POWER PLANT

(30) Priorité: 05.05.2021 FR 2104749
(43) Date de publication de la demande: 13.03.2024
(73) Titulaire: Caillard, Frédéric, 67000 Strasbourg (FR)
(72) Inventeur: Caillard, Frédéric, 67000 Strasbourg (FR)
(74) Mandataire: Hege, Frédéric
(86) Numéro de dépôt international: PCT/EP2022/061853
(87) Numéro de publication internationale: WO 2022/233874

(56) Documents cités:
- FR-A- 1 093 680
- FR-A5- 2 116 671
- US-A- 4 619 809
- US-A1- 2010 024 382

## Description

La présente invention se situe dans le domaine de la production d'électricité ou de force motrice. Elle concerne plus particulièrement une centrale thermique de production d'électricité ou de force motrice.

Une centrale thermique comporte habituellement une ou plusieurs chaudières dans lesquelles sont brûlés des combustibles et/ou une ou plusieurs chaudières de récupération. La chaleur produite dans la ou les chaudière(s) est utilisée pour chauffer un fluide de travail, qui est ensuite acheminé vers au moins une turbine pour la mettre en mouvement. Le mouvement de la turbine produit une force motrice ou permet à un alternateur de produire de l'électricité. Dans le cas particulier d'une centrale à incinération de déchets, le fluide de travail est habituellement dans la ou les chaudière(s) à un niveau de pression compris entre 20 et 85 bars.

Afin d'augmenter le rendement des centrales thermiques, elles peuvent opérer selon un cycle de Rankine à resurchauffe. Dans ce cas, la (ou les) turbine(s) comporte au moins deux sections, et au moins un module de resurchauffe permet de réchauffer le fluide de travail entre deux sections de la turbine. Pour ce faire, ledit module de resurchauffe peut être de diverses conceptions. Dans le cas le plus répandu (resurchauffe interne), il est situé au moins en partie dans la chaudière et resurchauffe le fluide de travail au contact - par exemple - des fumées de combustion. Dans d'autres cas, il peut être externe à la chaudière et être alimenté par diverses sources de chaleur, issues par exemple de procédés externes ou du fluide de travail lui-même. Par exemple pour le cas des centrales thermiques d'incinération de déchets, on a cherché à utiliser un fluide de travail à haut niveau de pression, par exemple supérieur à 70 bars, associé à une resurchauffe externe. Dans le cas des centrales thermiques utilisant d'autres types de combustible ou de la chaleur de récupération, l'utilisation de cycles à resurchauffe est également très fréquemment couplée à de hauts niveaux de pression du fluide de travail. Le rendement est ainsi amélioré, mais la gestion de ce niveau de pression comporte un certain nombre d'inconvénients, de manière particulièrement sensible s'agissant de combustibles sous forme de déchets :
- le coût d'investissement d'une chaudière et d'un circuit de fluide de travail à haut niveau de pression est plus élevé que pour un niveau de pression classique,
- une chaudière à haut niveau de pression a une température de parois plus élevée, ce qui se traduit par une dégradation plus rapide des réfractaires et un taux d'usure des tubes des premiers passages plus élevé. Une maintenance plus importante est donc nécessaire, et le taux d'indisponibilité non-programmée de la chaudière est plus élevé que pour un niveau de pression classique.
- le taux d'indisponibilité de la turbine est plus élevé que dans une centrale sans resurchauffe, car la turbine ne peut le plus souvent pas fonctionner lorsque l'étape de resurchauffe est indisponible, en raison du fort taux de condensation dans les étages basse pression de la turbine en l'absence de resurchauffe. Les causes principales d'indisponibilité de l'étape de resurchauffe sont les pannes des éventuelles pompes liées à la resurchauffe et les fuites au niveau d'un échangeur de resurchauffe. Pour les centrales dont la resurchauffe est interne, une fuite au niveau d'un échangeur de resurchauffe peut aussi aboutir à une indisponibilité non-programmée de la chaudière.

Finalement le gain de rendement électrique est en partie annulé par ces coûts supplémentaires et par la réduction de la production électrique engendrée par ces indisponibilités supplémentaires. Les documents US4619809 et FR2116671 montrent des centrales thermiques de production d'électricité connues dans l'art antérieur.

Dans le cas d'une centrale thermique dont une partie des combustibles sont des déchets, ou unité de valorisation énergétique (UVE), ces problèmes sont encore plus importants car les fumées sont corrosives, ce qui pose déjà des problèmes d'usures des chaudières à un niveau de pression classique.

Un objet de la présente invention est de proposer une centrale thermique à rendement amélioré tout en réduisant les coûts de fabrication et d'exploitation.

Un autre objet de la présente invention est de proposer une centrale thermique compatible avec la combustion de déchets à rendement amélioré.

La présente invention a pour objet de répondre au moins en partie aux objets précités en proposant une centrale thermique comportant, outre le circuit principal classique du fluide de travail actionnant une turbine, un deuxième circuit dit secondaire dans lequel circule un fluide de resurchauffe, le fluide de resurchauffe étant chauffé dans la chaudière puis utilisé pour resurchauffer le fluide de travail. A cet effet, elle propose une centrale thermique de production d'électricité ou de force motrice comportant au moins une chaudière à combustibles ou à récupération de chaleur, au moins une turbine, au moins un circuit principal de circulation d'un fluide de travail, au moins un ballon situé dans la chaudière sur ledit circuit principal, au moins un module de resurchauffe et au moins un circuit secondaire dans lequel circule un fluide de resurchauffe, dans laquelle :
- ledit circuit principal comporte au moins un tronçon initial situé dans ladite au moins chaudière, au moins un premier tronçon permettant d'envoyer du fluide de travail de ladite au moins une chaudière vers un premier ensemble d'au moins une section de turbine, et un deuxième tronçon permettant d'envoyer du fluide de travail dudit premier ensemble d'au moins une section de turbine vers un deuxième ensemble d'au moins une section de turbine, ledit fluide de travail dans ledit ballon étant au point de charge nominal à un niveau de pression principal, et
- ledit module de resurchauffe comporte au moins un échangeur de chaleur aval situé au niveau du deuxième tronçon du circuit principal.

Cette centrale est particulière en ce que ledit circuit secondaire comporte au moins un échangeur de chaleur amont situé dans ladite chaudière, ledit fluide de resurchauffe circulant dans ledit circuit secondaire entre les échangeurs de chaleur amont et aval, ledit fluide de resurchauffe étant en sortie de l'échangeur de chaleur amont au point de charge nominal à un niveau de pression secondaire, et ledit niveau de pression secondaire étant plus élevé d'au moins dix bars que ledit niveau de pression principal.

Grâce à ces dispositions, le fluide de travail peut être resurchauffé sans avoir besoin d'être lui-même à un haut niveau de pression dans la chaudière, ce qui permet de réduire le nombre d'éléments de la centrale dans lesquels circule un fluide à haute pression. Ceci permet d'utiliser plus d'éléments tels que des économiseurs, ballons, surchauffeurs, évaporateurs et autres surfaces d'échange évaporatrices (parois, etc...) non compatibles avec un haut niveau de pression, et donc moins chers, et de réduire l'usure due aux températures associées aux hauts niveaux de pression dans ces éléments de la centrale.

Selon d'autres caractéristiques :
- lesdits combustibles peuvent comporter des déchets tels que des déchets ménagers, des déchets d'activités économiques, des déchets dangereux, de la biomasse, des boues d'épuration, ou encore des déchets médicaux, ledit niveau de pression principal étant compris entre 20 et 85 bars, et ledit niveau de pression secondaire étant supérieur à 70 bars, ce type de centrale étant particulièrement adapté à l'invention, car les fumées corrosives ne permettent habituellement pas de resurchauffe interne alimentée par les fumées de la chaudière dans des conditions satisfaisantes,
- l'échangeur de chaleur amont peut être un échangeur de type convectif, ce qui permet qu'il soit placé dans le passage convectif de la chaudière et qu'il soit ainsi exposé à des températures inférieures à celles du foyer et des passages radiatifs de la chaudière, ceci ayant pour avantage de pouvoir utiliser des matériaux moins coûteux et de réduire l'usure engendrée par l'exposition aux hautes températures,
- ladite centrale thermique peut être configurée pour qu'au moins 90% de la masse de fluide de resurchauffe en sortie de l'échangeur de chaleur amont soit envoyé dans l'échangeur aval, ce qui permet d'assurer une bonne efficacité de la resurchauffe,
- ladite centrale thermique peut être configurée pour que l'intégralité de la masse de fluide de resurchauffe en sortie de l'échangeur de chaleur amont soit envoyée dans l'échangeur aval, ce qui permet de maximiser l'efficacité de la resurchauffe,
- le fluide de resurchauffe circulant dans ledit circuit secondaire entre l'échangeur de chaleur amont et l'échangeur aval peut être à l'état liquide, ce qui permet d'éviter les changements de phase dans le circuit secondaire, et d'éviter notamment la mise en place d'un deuxième ballon chaudière sur le circuit secondaire, qui rendrait la centrale plus coûteuse et plus complexe à exploiter,
- ladite chaudière peut comporter un circuit fumées, et ledit échangeur de chaleur amont peut être situé dans ledit circuit fumées de ladite chaudière, ceci étant un mode de réalisation simple et efficace de l'invention,
- ledit circuit secondaire peut comporter au moins une pompe permettant d'atteindre le niveau de pression secondaire, ce qui est un mode de réalisation simple et robuste de l'invention,
- ledit circuit secondaire peut être alimenté en fluide de resurchauffe par au moins deux sources distinctes, le niveau de pression et/ou de température des deux sources étant différentes, ce qui permet de réguler efficacement le débit et/ou la température du fluide de resurchauffe, et ainsi la température du fluide de travail resurchauffé,
- ladite centrale thermique peut comporter en outre :
   - un premier capteur de température sur le deuxième tronçon du circuit principal, en aval dudit échangeur de chaleur aval,
   - un capteur de pression, situé sur ledit circuit secondaire,
   - un deuxième capteur de température, situé sur ledit circuit secondaire entre ledit échangeur de chaleur amont et ledit échangeur de chaleur aval, et
   - un système de régulation relié aux premier et deuxième capteurs de température et de pression, et à au moins une vanne de régulation du débit d'une source de fluide de resurchauffe du circuit secondaire ou du débit du bypass total ou partiel de l'échangeur de chaleur amont,
   ce qui est un moyen simple et efficace de réguler la température du fluide de travail resurchauffé, tout en permettant d'éviter d'atteindre le point d'ébullition du fluide de resurchauffe dans le cas où celui-ci est liquide.
- ladite centrale thermique peut comporter au moins un économiseur situé sur le tronçon initial du circuit principal, au moins une partie de l'alimentation en fluide de resurchauffe du circuit secondaire provenant d'une sortie dudit économiseur et/ou d'un circuit de condensat et d'eau alimentaire, ce qui sont des sources faciles d'accès permettant d'avoir une diversité de sources pour le circuit secondaire,
- ledit fluide de resurchauffe peut être envoyé après ledit échangeur de chaleur aval, vers un ballon situé dans ladite chaudière et/ou vers un circuit de condensat et d'eau alimentaire, ce qui permet une descente en pression du fluide de resurchauffe, et une récupération des calories qu'il transporte dans le fonctionnement de la centrale.

La présente invention concerne également un procédé de production d'électricité ou de force motrice dans une centrale thermique selon l'invention, comportant les étapes suivantes :
- combustion de combustibles ou récupération de chaleur dans au moins une chaudière,
- dans ladite chaudière, montée en enthalpie d'un fluide de travail dans un circuit principal, et montée en enthalpie d'un fluide de resurchauffe dans un circuit secondaire, à partir de l'énergie contenue dans les fumées de combustion ou dans le fluide de récupération.
- envoi dudit fluide de travail dans au moins un premier ensemble d'au moins une section de turbine,
- envoi dudit fluide de travail dudit premier ensemble d'au moins une section de turbine vers au moins un échangeur de chaleur aval d'un module de resurchauffe, et envoi dudit fluide de resurchauffe de l'échangeur de chaleur amont (10) vers ledit échangeur de chaleur aval,
- transfert de chaleur dudit fluide de resurchauffe vers ledit fluide de travail dans ledit échangeur de chaleur aval,
- envoi dudit fluide de travail dudit échangeur de chaleur aval vers un deuxième ensemble d'au moins une section de turbine.

Grâce à ces dispositions, le fluide de travail peut être resurchauffé sans avoir besoin d'être lui-même à un haut niveau de pression dans la chaudière, ce qui permet de réduire le nombre d'éléments de la centrale dans lesquels circule un fluide à haute pression. Ceci permet d'utiliser plus d'éléments tels que des économiseurs, ballons, surchauffeurs, évaporateurs et autres surfaces d'échange évaporatrices (parois, etc...) non compatibles avec la haute pression, et donc moins chers, et de réduire l'usure due aux températures associées à la haute pression dans ces éléments de la centrale.

Selon d'autres caractéristiques :
- au moins 90% de la masse de fluide de resurchauffe en sortie de l'échangeur de chaleur amont peut être envoyé dans l'échangeur aval, ce qui permet d'assurer une bonne efficacité de la resurchauffe.
- l'intégralité de la masse de fluide de resurchauffe en sortie de l'échangeur de chaleur amont peut être envoyée dans l'échangeur aval, ce qui permet de maximiser l'efficacité de la resurchauffe.

La présente invention sera mieux comprise à la lecture de la description détaillée qui fait suite, en référence aux figures annexées dans lesquelles :

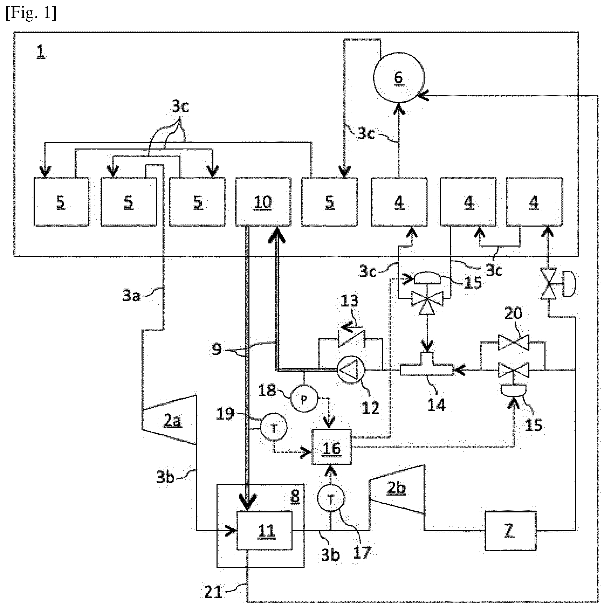

[Fig.1] La [Fig.1] est un schéma de fonctionnement d'une centrale thermique selon un mode de réalisation préféré de l'invention.

La centrale thermique selon l'invention, illustrée dans un mode de réalisation préféré en [Fig.1], permet de produire de l'électricité ou de la force motrice à partir de la combustion de combustibles ou de chaleur de récupération dans au moins une chaudière 1. La centrale thermique selon l'invention n'est donc pas une centrale nucléaire, l'énergie nucléaire ne donnant pas lieu à une réaction de combustion, et les générateurs de vapeur des centrales nucléaires n'entrant pas dans la catégorie des chaudières de récupération de chaleur.

Les combustibles peuvent comporter des combustibles fossiles comme du charbon, du gaz naturel, ou encore du fioul. Ils peuvent également comporter de la biomasse, du biogaz ou du syngas. Dans un mode préféré de l'invention, les combustibles comportent des déchets tels que des déchets ménagers, des déchets d'activités économiques, des déchets dangereux, de la biomasse, des boues d'épuration ou encore des déchets médicaux. La centrale thermique comporte au moins une turbine, comprenant au moins deux ensembles d'au moins une section de turbine 2a, 2b, et un circuit principal permettant d'apporter de l'enthalpie à un fluide de travail dans la chaudière 1 et de faire circuler le fluide de travail de la chaudière 1 vers la turbine. Le fluide de travail est par exemple de l'eau, qui peut être à certaines étapes sous forme liquide, et à d'autres étapes sous forme de vapeur. La turbine permet de convertir l'énergie thermique en provenance de la chaudière 1 via le fluide de travail, en un mouvement. Ce mouvement peut ensuite être récupéré par un alternateur pour générer de l'électricité ou être utilisé comme force motrice.

Le circuit principal comporte, en aval de la chaudière 1 au moins deux tronçons, dont un premier tronçon 3a permettant d'envoyer du fluide de travail de la chaudière 1 vers le premier ensemble d'au moins une section de turbine 2a, et au moins un deuxième tronçon 3b permettant d'envoyer du fluide de travail du premier ensemble d'au moins une section de turbine 2a vers le deuxième ensemble d'au moins une sections de turbine 2b. On décrira ci-après un mode de réalisation particulier de l'invention en prenant l'exemple d'un seul premier tronçon 3a et d'un seul deuxième tronçon 3b, mais l'invention se met en œuvre sans difficulté d'une manière similaire avec plusieurs premiers tronçons 3a et plusieurs deuxièmes tronçons 3b, par exemple dans le cas de cycle à resurchauffe à plusieurs étages, ou de tronçons parallèles en raison du nombre de turbines ou du nombre de modules de resurchauffe 8 dans la centrale thermique.

En amont du premier tronçon 3a, le circuit principal comporte un tronçon initial 3c situé dans la chaudière, permettant de faire monter en enthalpie le fluide de travail. Le tronçon initial 3c comporte un ballon 6, éventuellement plusieurs ballons 6, permettant de séparer les phases du fluide de travail. Le tronçon initial 3c peut comporter un ou plusieurs économiseurs 4, afin de réchauffer le fluide de travail lorsqu'il est à l'état liquide et/ou une ou plusieurs surfaces évaporatrices, afin de faire passer le fluide de travail d'un état liquide à un état gazeux et/ou un ou plusieurs surchauffeurs 5, permettant de chauffer le fluide de travail lorsqu'il est à l'état gazeux. Un ballon 6 peut être disposé par exemple entre un économiseur 4 et un surchauffeur 5.

Dans le mode de réalisation de la [Fig.1], le tronçon initial 3c comporte trois économiseurs 4, quatre surchauffeurs 5, un ballon 6 et des surfaces évaporatrices (non représentées) reliées au ballon.

Le fluide de travail dans le ballon 6, au point de charge nominal, est au niveau de pression principal, par exemple compris entre 20 et 85 bars dans le cas de l'incinération de déchets. Dans le deuxième tronçon 3b, après avoir transféré une partie de son énergie au premier ensemble d'au moins une section de turbine 2a, le fluide de travail est à un niveau de pression dit intermédiaire, inférieur au niveau de pression principal. Dans le cas d'une centrale thermique d'incinération de déchets sans resurchauffeur, le fluide de travail est typiquement à une température comprise entre 320 et 480°C dans le premier tronçon 3a, la température du fluide de travail dans le premier tronçon 3a étant plus élevée que dans le deuxième tronçon 3b.

Après son entrée dans le premier ensemble d'au moins une section de turbine 2a, respectivement dans le deuxième ensemble d'au moins une section de turbine 2b, le fluide de travail descend en température et/ou en pression en mettant en mouvement le premier ensemble d'au moins une section de turbine 2a, respectivement le deuxième ensemble d'au moins une section de turbine 2b.

En sortie du premier ensemble d'au moins une section de turbine 2a, tout le fluide de travail peut être entièrement renvoyé vers le deuxième tronçon 3b du circuit principal. Alternativement, une partie seulement du fluide de travail peut être renvoyé vers le deuxième tronçon 3b du circuit principal et une autre partie peut être soutirée vers un circuit de condensat et d'eau alimentaire 7 ou vers d'autres procédés externes ou internes à la centrale thermique permettant de réutiliser le fluide de travail et par exemple l'énergie thermique qu'il comporte encore. Il peut également y avoir des soutirages d'une partie du fluide de travail au sein des premiers et deuxième ensembles d'au moins une section de turbine 2a, 2b vers le circuit de condensat et d'eau alimentaire 7 ou vers d'autres procédés externes ou internes. En sortie du deuxième ensemble d'au moins une section de turbine 2b, tout le fluide de travail peut être dirigé vers le circuit de condensat et d'eau alimentaire 7, qui peut comprendre une étape de condensation du fluide de travail, ou vers d'autres procédés externes ou internes. En sortie des procédés externes ou internes mentionnés ci-dessus, le fluide de travail peut être renvoyé par exemple vers un circuit de condensat et d'eau alimentaire 7.

Le circuit de condensat et d'eau alimentaire 7 peut ensuite être utilisé comme source de fluide pour le circuit principal, par exemple en le raccordant au tronçon initial 3c, et/ou pour le circuit secondaire 9 décrit plus bas.

La centrale thermique comporte encore au moins un module de resurchauffe 8, permettant de réchauffer le fluide de travail entre deux ensembles d'au moins une section de turbine 2a, 2b.

Le module de resurchauffe 8 est alimenté en énergie thermique par un circuit secondaire 9, dans lequel circule un fluide de resurchauffe. Le fluide de resurchauffe est distinct des fumées de combustion ou du fluide de récupération. Le fluide de resurchauffe est par exemple de l'eau, qui peut être à certaines étapes sous forme liquide, et à d'autres étapes sous forme de vapeur. Dans le mode de réalisation de la [Fig.1], le fluide de resurchauffe est sous forme liquide. Le circuit secondaire 9 est lui-même alimenté en énergie thermique par un ou plusieurs échangeurs de chaleur amont 10 situé dans la chaudière 1. De l'énergie thermique est donc transférée de la chaudière 1 vers le fluide de resurchauffe circulant dans le circuit secondaire 9, par l'intermédiaire de l'échangeur de chaleur amont 10.

L'échangeur de chaleur amont 10 peut être de type convectif, c'est-à-dire que plus de 50% de la chaleur transférée au sein de l'échangeur amont 10 est transférée par convection. Cette disposition permet de disposer l'échangeur amont 10 dans un passage convectif de la chaudière, et non dans le foyer ou dans les passages radiatifs. Les températures auxquelles l'échangeur amont 10 est exposé étant inférieures dans un passage convectif que dans le foyer ou dans un passage radiatif, l'usure de l'échangeur de chaleur amont 10 est réduite, et l'échangeur de chaleur amont 10 peut être conçu avec des matériaux (alliages, protection réfractaire) moins coûteux que s'il était disposé dans le foyer ou dans les passages radiatifs.

L'échangeur de chaleur amont 10 est par exemple situé au contact du circuit fumées de la chaudière 1, et l'échangeur de chaleur amont 10 permet de transférer de la chaleur à partir des fumées de combustion ou du fluide de récupération vers le fluide de resurchauffe circulant dans le circuit secondaire 9. L'échangeur de chaleur amont 10 peut par exemple être placé entre deux surchauffeurs 5, ou dans tout autre lieu pertinent de la chaudière.

L'échangeur de chaleur amont 10 peut comprendre un ou plusieurs éléments situés sur le circuit secondaire 9, dans la chaudière 1, parmi lesquels un ou plusieurs économiseurs, afin de réchauffer le fluide de resurchauffe lorsqu'il est à l'état liquide et/ou une ou plusieurs surfaces évaporatrices, afin de faire passer le fluide de resurchauffe d'un état liquide à un état gazeux et/ou un ou plusieurs surchauffeurs, permettant de chauffer le fluide de resurchauffe lorsqu'il est à l'état gazeux. Le circuit secondaire 9, dans la chaudière 1, peut également comporter un ou plusieurs ballon(s), permettant de séparer les phases du fluide de resurchauffe lorsqu'il passe à l'état gazeux.

Le module de resurchauffe 8 comporte un ou plusieurs échangeurs de chaleur aval 11, situé au niveau du deuxième tronçon 3b du circuit principal. Dans l'échangeur de chaleur aval 11, de l'énergie thermique est transférée du fluide de resurchauffe circulant dans le circuit secondaire 9 vers le fluide de travail circulant dans le deuxième tronçon 3b du circuit principal.

Le fluide de resurchauffe circule donc entre les échangeurs de chaleur amont 10 et aval 11, afin de transférer de l'énergie thermique de la chaudière vers le fluide de travail circulant dans au moins un deuxième tronçon 3b, ledit deuxième tronçon 3b reliant un premier ensemble d'au moins une sections de turbine 2a à un deuxième ensemble d'au moins une sections de turbine 2b. En sortie de l'échangeur de chaleur amont 10, le fluide de resurchauffe est à un niveau de pression secondaire, par exemple supérieure à 70 bars dans le cas d'une centrale à incinération de déchets. Le niveau de pression secondaire est plus élevé d'au moins dix bars que le niveau de pression principal. Un tel différentiel de niveaux de pression est avantageux parce qu'il permet, dans le circuit secondaire, d'atteindre les températures nécessaires à la resurchauffe, et dans le circuit principal, de ne pas devoir utiliser de pressions élevées.

Afin d'assurer une bonne efficacité de la resurchauffe, au moins 90%, de préférence l'intégralité de la masse de fluide de resurchauffe en sortie de l'échangeur de chaleur amont 10 peut être envoyé dans l'échangeur aval 11. En effet plus la quantité de fluide de resurchauffe en sortie de l'échangeur de chaleur amont 10 envoyée vers l'échangeur aval 11 est importante, plus la resurchauffe est efficace.

En entrée du module de resurchauffe 8, le fluide de travail est de préférence sous forme de vapeur. Dans certains modes de réalisation, il peut être sous forme bi phasique. Dans ce cas, il comprend alors par exemple un fort pourcentage de vapeur et un faible pourcentage de liquide, par exemple 98% et 2%, pourcentages qui dépendent notamment des caractéristiques vapeur à l'entrée de la turbine, du rendement de la turbine, et du niveau de pression de la resurchauffe. Une séparation des phases est alors effectuée dans le module de resurchauffe 8, et la phase liquide est évacuée, typiquement vers le circuit de condensat et d'eau alimentaire 7 ou vers d'autres procédés.

En entrée de l'échangeur de chaleur aval 11, le fluide de resurchauffe est de préférence sous forme liquide. Il peut également être sous forme gazeuse. Dans ce dernier cas, la centrale thermique comporte typiquement un ballon situé dans la chaudière sur le circuit secondaire. Dans un mode particulier de réalisation de l'invention, le fluide de resurchauffe en entrée de l'échangeur de chaleur aval 11 est sous forme gazeuse, dans un état proche de sa température de condensation, par exemple à un niveau de pression compris entre 85 et 145 bars et une température comprise entre 300 et 340°C. Lorsque le fluide de resurchauffe entre dans l'échangeur de chaleur aval 11 sous forme gazeuse, il transfère de la chaleur vers le fluide de travail, et arrive rapidement à sa température de condensation ; à ce moment-là il est dans les meilleures conditions pour transférer de la chaleur, avec un coefficient de transfert de chaleur par condensation. En sortie de l'échangeur de chaleur aval 11 le fluide de resurchauffe a transféré suffisamment de chaleur vers le fluide de travail pour retrouver un état liquide.

Afin de parvenir au niveau de pression secondaire, le circuit secondaire 9 peut comporter une ou plusieurs pompes 12. L'utilisation de pompes 12 dédiées permet de pressuriser le fluide de resurchauffe seulement dans les sections nécessaires, afin de réduire le nombre d'éléments de la centrale qui doivent être compatibles avec de la haute pression. Alternativement la ou les sources alimentant le circuit secondaire 9 peuvent délivrer un fluide à haute pression.

La pompe 12 est de préférence munie d'un bypass 13 équipé d'un système de non-retour. Si la pompe 12 ne peut plus fonctionner, le circuit secondaire 9 peut ainsi continuer à être alimenté automatiquement, bien qu'à un niveau de pression différent du niveau de pression nominal du circuit secondaire.

Après être passé dans l'échangeur de chaleur aval 11, le fluide de resurchauffe, qui est descendu en température et/ou en pression, quitte le module de resurchauffe 8 par un circuit de condensat du module de resurchauffe 21. Il peut alors être envoyé vers une ou plusieurs des destinations suivantes : le tronçon initial 3c du circuit principal, ce qui correspond à un mode de réalisation préféré de l'invention, où le fluide de resurchauffe est envoyé vers le ballon 6 situé sur le tronçon initial 3c, et le fluide de resurchauffe est incorporé au fluide de travail, le circuit secondaire 9 au niveau de l'échangeur de chaleur amont 10, le circuit de condensat et d'eau alimentaire 7, ou encore un procédé interne ou externe. Lorsque le fluide de resurchauffe quitte le circuit de condensat du module de resurchauffe 21, il peut « flasher », c'est-à-dire s'évaporer partiellement, en fonction des niveaux de pression et de température respectifs du circuit de condensat du module de resurchauffe 21 et du système de destination. Ce phénomène de flash peut nécessiter des installations adaptées, comme par exemple un ballon flash, ou l'utilisation d'un ballon chaudière comme le ballon 6.

L'alimentation en fluide de resurchauffe du circuit secondaire 9 peut être assurée, de manière non limitative, par une ou plusieurs des sources suivantes : le circuit de condensat et d'eau alimentaire 7, le circuit de condensat du module de resurchauffe 21, un procédé interne ou externe ayant en sortie un fluide à des conditions pertinentes, ou encore un ou plusieurs éléments situés dans le tronçon initial 3c du circuit principal tel qu'un économiseur 4, ou un ballon 6.

De préférence, l'alimentation en fluide de resurchauffe du circuit secondaire 9 est assurée par au moins deux sources distinctes, chacune des sources fournissant un fluide avec des paramètres de température et/ou de pression différents. Le circuit secondaire 9 comporte alors un moyen de mélange 14 auquel sont raccordées les différentes sources. Alternativement ou en combinaison avec cette pluralité de sources, le circuit secondaire 9 peut comporter un bypass partiel ou total de l'échangeur de chaleur amont 10. Ces caractéristiques permettent de réguler le circuit secondaire 9 en adaptant les paramètres du fluide de resurchauffe en entrée, par exemple aux changements de charge de la chaudière, aux changements de niveaux d'encrassement de la chaudière et aux autres variations des conditions d'exploitation de la chaudière telles que la qualité du combustible, ou encore le taux d'O₂ dans les fumées. La pluralité de sources et/ou le bypass permettent à la fois de réguler le débit et la température du fluide de travail resurchauffé et de s'assurer que le point d'ébullition du fluide de resurchauffe n'est pas atteint dans le circuit secondaire 9, dans le cas où le circuit secondaire est conçu pour être entièrement en phase liquide. Pour ce faire, les débits des sources d'alimentation du circuit secondaire 9 et/ou le débit du bypass peuvent être ajustés par une ou plusieurs vannes de régulation 15 commandées par un système de régulation 16. Le système de régulation 16 peut déterminer les commandes à envoyer aux vannes de régulation 15 en fonction d'une ou plusieurs mesures issues par exemple de :
- un premier capteur de température 17 sur le deuxième tronçon 3b du circuit principal, en aval de l'échangeur de chaleur aval 11,
- un capteur de pression 18, situé sur le circuit secondaire 9 en aval d'une éventuelle pompe 12,
- un deuxième capteur de température 19, situé sur le circuit secondaire 9 entre l'échangeur de chaleur amont 10 et l'échangeur de chaleur aval 11.

Le bypass total de l'échangeur de chaleur amont 10 permet de faire en sorte qu'une partie du débit du fluide de resurchauffe en amont de l'échangeur de chaleur amont 10 contourne tout ou partie de l'échangeur de chaleur amont 10 et soit envoyé directement vers une section du circuit secondaire 9 située en aval de l'échangeur de chaleur amont 10. Un bypass partiel peut être présent lorsque l'échangeur de chaleur amont 10 comporte plusieurs sections en série, le bypass partiel permettant alors de contourner une ou plusieurs sections de l'échangeur de chaleur amont 10 sans contourner la totalité des sections de l'échangeur de chaleur amont 10.

Dans le mode de réalisation illustré en [Fig.1], le circuit secondaire 9 est alimenté par une source en sortie d'un économiseur 4, et une source branchée au circuit de condensat et d'eau alimentaire 7.

La pluralité de sources avec des paramètres différents de pression et/ou température permet à la fois de réguler la température du fluide de travail resurchauffé et de s'assurer que le point d'ébullition du fluide de resurchauffe n'est pas atteint dans le circuit secondaire 9. Si une seule source est utilisée pour alimenter le circuit secondaire 9, il n'est pas possible de réguler ces deux paramètres indépendamment. Le système peut alors fonctionner en priorisant les paramètres en fonction des situations.

Les vannes de régulation 15 peuvent être des vannes trois voies, ou des vannes de régulation simple à deux voies. Comme illustré sur la [Fig.1], on peut par exemple utiliser une vanne de régulation 15 à trois voies pour récupérer du fluide sur le circuit principal, sur cet exemple entre deux économiseurs 4. Dans cet exemple, la vanne de régulation 15 à deux voies peut être utilisée pour réguler la température du fluide de resurchauffe en aval de l'échangeur de chaleur amont 10, en fonction du niveau de pression du circuit secondaire 9, qui peut être par exemple mesuré en aval d'une pompe 12 ou en aval de l'échangeur de chaleur amont 10, afin de s'assurer que le point d'ébullition du fluide de resurchauffe n'est pas atteint dans le circuit secondaire 9. La vanne de régulation 15 à trois voies peut réguler la température du fluide de travail resurchauffé, également en fonction du niveau de pression du circuit secondaire 9.

Une ou plusieurs vannes de régulation 15 peuvent être doublées d'un système de bypass, par exemple par l'intermédiaire d'une ou plusieurs vannes manuelles 20 ou vanne automatique ou vanne de régulation, afin de permettre un mode de fonctionnement dégradé en cas de problème sur la ou les vannes de régulation 15.

La présente invention concerne également un procédé de production d'électricité ou de force motrice dans une centrale thermique, comportant les étapes suivantes :
- combustion de combustibles et/ou récupération d'énergie, le cas échéant des déchets, dans au moins une chaudière 1,
- dans ladite chaudière 1, montée en enthalpie d'un fluide de travail dans un circuit principal, et montée en enthalpie d'un fluide de resurchauffe dans le circuit secondaire 9, à partir de l'énergie contenue dans les fumées de combustion ou dans le fluide de récupération, le circuit secondaire étant à un niveau de pression supérieur à celui du circuit principal, la différence de niveau de pression entre les circuits étant d'au moins 10 bars,
- envoi dudit fluide de travail dans au moins un premier ensemble d'au moins une section de turbine 2a,
- envoi dudit fluide de travail dudit premier ensemble d'au moins une section de turbine 2a vers au moins un échangeur de chaleur aval 11 d'un module de resurchauffe 8, et envoi dudit fluide de resurchauffe de l'échangeur de chaleur amont (10) vers ledit échangeur de chaleur aval 11,
- transfert de chaleur du fluide de resurchauffe vers le fluide de travail dans ledit échangeur de chaleur aval 11 du module de resurchauffe 8,
- envoi dudit fluide de travail dudit échangeur de chaleur aval 11 vers un deuxième ensemble d'au moins une section de turbine 2b.

Différents problèmes techniques peuvent avoir pour conséquence que la température de resurchauffe cible du fluide de travail en aval de l'échangeur de chaleur aval 11 n'est pas atteinte. Il s'agit par exemple d'une indisponibilité de la pompe 12 ou d'une autre pompe, d'une fuite de l'échangeur de chaleur aval 11 ou encore d'un incident sur une vanne de régulation 15. Dans une centrale thermique classique avec cycle à resurchauffe, le fait de ne pas atteindre la température de resurchauffe cible à cet endroit peut imposer l'arrêt d'une partie de la turbine. La raison de cet arrêt est la nécessité d'éviter de dégrader la dernière section du deuxième ensemble d'au moins une section de turbine 2b en cas de condensation excessive due à l'absence de resurchauffe. L'arrêt de la dernière section de l'ensemble d'au moins une section de turbine 2b peut avoir pour conséquence un arrêt de la production d'électricité d'une partie ou de toute la turbine. Dans la centrale thermique selon l'invention, par exemple dans le cas particulier de l'incinération des déchets et du mode de réalisation préféré, les paramètres de vapeur du circuit principal et le niveau de pression et température du circuit secondaire rendent possible l'ajustement de la consigne de vide de l'échappement de la turbine, par exemple par le biais d'une régulation basée sur la mesure de température du fluide de travail en sortie du module de resurchauffe 8, afin d'éviter les niveaux de condensation excessifs mentionnés ci-dessus. Il peut donc être possible, dans une centrale thermique selon l'invention, d'éviter l'arrêt d'une partie ou de toute la turbine lors d'une absence de resurchauffe.

La présente invention permet que le fluide de resurchauffe dans le circuit secondaire 9 soit à un niveau de pression plus élevé que le fluide de travail du circuit principal. En conséquence, la plupart des éléments situés dans la chaudière peuvent être conçus pour un niveau de pression classique, correspondant au niveau de pression principal, le cas échéant les économiseurs 4, le ballon 6, les surfaces évaporatrices, les évaporateurs, les surchauffeurs 5, et seule une petite partie de la surface d'échange de la chaudière, en particulier l'échangeur de chaleur amont 10, doit être conçue pour un haut niveau de pression correspondant au niveau de pression secondaire, ce qui réduit significativement les coûts d'investissement par rapport à une chaudière à haute pression. Cela permet aussi de conserver le niveau de température des parois de la chaudière et donc des réfractaires à un niveau classique, par exemple dans le cas de l'incinération de déchets entre 210C et 290C.

La présente invention est particulièrement adaptée aux centrales à combustibles de type déchets. En effet, ce type de centrale ne comporte habituellement pas de resurchauffeur, car les fumées corrosives ne favorisent pas l'utilisation de resurchauffeurs situés dans les fumées. Quelques centrales à combustibles de type déchets ont donc été construites avec des chaudières haute pression dont la vapeur haute pression (issue du circuit principal) alimente les resurchauffeurs. Ce type de centrale est confrontée à des coût d'investissement plus élevé (haute pression) et à des coûts d'exploitation plus élevés (indisponibilités non programmées plus fréquentes, coûts de maintenance plus élevés).

Bien que la description ci-dessus se base sur des modes de réalisation particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Centrale thermique de production d'électricité ou de force motrice comportant au moins une chaudière (1) à combustibles ou à récupération de chaleur, au moins une turbine, au moins un circuit principal de circulation d'un fluide de travail, au moins un ballon (6) situé dans la chaudière (1) sur ledit circuit principal, au moins un module de resurchauffe (8) et au moins un circuit secondaire (9) dans lequel circule un fluide de resurchauffe, dans laquelle :
- ledit circuit principal comporte au moins un tronçon initial (3c) situé dans ladite au moins une chaudière (1), au moins un premier tronçon (3a) permettant d'envoyer du fluide de travail de ladite au moins une chaudière (1) vers un premier ensemble d'au moins une section de turbine (2a), et un deuxième tronçon (3b) permettant d'envoyer du fluide de travail dudit premier ensemble d'au moins une section de turbine (2a) vers un deuxième ensemble d'au moins une section de turbine (2b), et
- ledit module de resurchauffe (8) comporte au moins un échangeur de chaleur aval (11) situé au niveau du deuxième tronçon (3b) du circuit principal,
où ledit circuit secondaire (9) comporte au moins un échangeur de chaleur amont (10) situé dans ladite chaudière (1), l'échangeur de chaleur amont (10) permettant de transférer de la chaleur à partir de fumées de combustion ou d'un fluide de récupération vers le fluide de resurchauffe circulant dans le circuit secondaire (9), ledit fluide de resurchauffe circulant dans ledit circuit secondaire (9) entre les échangeurs de chaleur amont (10) et aval (11), **caractérisée en ce que** ladite centrale est conçue pour que le fluide de resurchauffe puisse être, en sortie de l'échangeur de chaleur amont (10), au point de charge nominal, à un niveau de pression plus élevé d'au moins dix bars que le niveau de pression au point de charge nominal du fluide de travail dans ledit ballon (6).

2. Centrale thermique selon la revendication précédente, dans laquelle lesdits combustibles comportent des déchets tels que des déchets ménagers, des déchets d'activités économiques, des déchets dangereux, de la biomasse, des boues d'épuration ou encore des déchets médicaux.

3. Centrale thermique selon l'une des revendications précédentes, dans laquelle l'échangeur de chaleur amont (10) est un échangeur de type convectif.

4. Centrale thermique selon l'une des revendications précédentes, configurée pour qu'au moins 90%, de préférence l'intégralité de la masse de fluide de resurchauffe en sortie de l'échangeur de chaleur amont (10) soit envoyée dans l'échangeur aval (11).

5. Centrale thermique selon l'une des revendications précédentes, dans laquelle ledit circuit secondaire (9) comporte au moins une pompe (12) configurée pour amener le niveau de pression du fluide de resurchauffe, en sortie de l'échangeur de chaleur amont (10), à un niveau plus élevé d'au moins dix bars que le niveau de pression au point de charge nominal du fluide de travail dans ledit ballon (6).

6. Centrale thermique selon l'une des revendications précédentes, dans laquelle ledit circuit secondaire (9) est alimenté en fluide de resurchauffe par au moins deux sources distinctes, le niveau de pression et/ou de température des deux sources étant différentes.

7. Centrale thermique selon l'une des revendications précédentes, dans laquelle le circuit secondaire (9) comporte un bypass partiel ou total de l'échangeur de chaleur amont (10).

8. Centrale thermique selon l'une des revendications 6 ou 7 comportant en outre :
- un premier capteur de température (17) sur le deuxième tronçon du circuit principal (3b), en aval de l'échangeur de chaleur aval (11),
- un capteur de pression (18), situé sur le circuit secondaire (9),
- un deuxième capteur de température (19), situé sur le circuit secondaire (9) entre l'échangeur de chaleur amont (10) et l'échangeur de chaleur aval (11), et
- un système de régulation (16) relié aux premier et deuxième capteurs de température (17, 19) et de pression (18), et à au moins une vanne de régulation (15) du débit d'une source de fluide de resurchauffe du circuit secondaire ou du débit du bypass total ou partiel de l'échangeur de chaleur amont (10).

9. Centrale thermique selon l'une des revendications précédentes comportant au moins un économiseur (4) situé sur le tronçon initial (3c) du circuit principal, au moins une partie de l'alimentation en fluide de resurchauffe du circuit secondaire (9) provenant d'une sortie dudit économiseur (4) et/ou d'un circuit de condensat et d'eau alimentaire (7).

10. Centrale thermique selon l'une des revendications précédentes, comportant un circuit de condensat et d'eau alimentaire (7), ladite centrale étant configurée pour que le fluide de resurchauffe puisse être envoyé après l'échangeur de chaleur aval (11), vers ledit ballon (6) situé dans la chaudière (1) et/ou vers ledit circuit de condensat et d'eau alimentaire (7).

11. Procédé de production d'électricité ou de force motrice dans une centrale thermique, comportant les étapes suivantes :
- combustion de combustibles ou récupération de chaleur dans une chaudière (1),
- dans ladite chaudière (1), montée en enthalpie d'un fluide de travail dans un circuit principal, ledit circuit principal comportant un ballon (6), ledit fluide de travail étant dans ledit ballon (6) à un niveau de pression principal, et montée en enthalpie d'un fluide de resurchauffe dans un circuit secondaire (9), ledit circuit secondaire (9) comportant au moins un échangeur de chaleur amont (10) situé dans la chaudière (1), l'échangeur de chaleur amont (10) permettant de transférer de la chaleur à partir de fumées de combustion ou d'un fluide de récupération vers le fluide de resurchauffe circulant dans le circuit secondaire (9), ledit fluide de resurchauffe étant à un niveau de pression secondaire en sortie dudit échangeur de chaleur amont (10), ledit niveau de pression secondaire étant plus élevé d'au moins dix bars que ledit niveau de pression principal,
- envoi dudit fluide de travail dans un premier ensemble d'au moins une section de turbine (2a),
- envoi dudit fluide de travail dudit premier ensemble d'au moins une section de turbine (2a) vers au moins un échangeur de chaleur aval (11) d'un module de resurchauffe (8), et envoi dudit fluide de resurchauffe de l'échangeur de chaleur amont (10) vers ledit échangeur de chaleur aval (11),
- transfert de chaleur dudit fluide de resurchauffe vers ledit fluide de travail dans ledit échangeur de chaleur aval (11),
- envoi dudit fluide de travail dudit échangeur de chaleur aval (11) vers un deuxième ensemble d'au moins une section de turbine (2b).

12. Procédé selon la revendication précédente, dans lequel au moins 90%, de préférence l'intégralité de la masse de fluide de resurchauffe en sortie de l'échangeur de chaleur amont (10) est envoyé dans l'échangeur aval (11).

13. Procédé selon l'une des revendications 11 à 12, dans laquelle l'échangeur de chaleur amont (10) est un échangeur de type convectif.

14. Procédé de production d'électricité ou de force motrice selon l'une des revendications 11 à 13, dans lequel lesdits combustibles comportent des déchets tels que des déchets ménagers, des déchets d'activités économiques, des déchets dangereux, de la biomasse, des boues d'épuration ou encore des déchets médicaux, ledit niveau de pression principal étant compris entre 20 et 85 bars, et ledit niveau de pression secondaire étant supérieur à 70 bars.

15. Procédé de production d'électricité ou de force motrice selon l'une des revendications 11 à 14, dans lequel ledit fluide de resurchauffe circulant dans ledit circuit secondaire (9) entre ledit échangeur de chaleur amont (10) et ledit échangeur aval (11) est à l'état liquide.

## Patentansprüche

1. Wärmekraftwerk zur Erzeugung von Elektrizität oder Antriebskraft aft mit mindestens einem mit Brennstoffen oder Wärmerückgewinnung betriebenen Heitzkessel (1), mindestens einer Turbine, mindestens einem Hauptkreislauf zur Zirkulation eines Arbeitsfluids, mindestens einem Speicher (6), der sich in dem Heitzkessel (1) an dem Hauptkreislauf befindet, mindestens einem Rückerhitzungsmodul (8) und mindestens einem Sekundärkreislauf (9), in dem ein Rückerhitzungsfluid zirkuliert, wobei :
- der Hauptkreislauf mindestens einen Anfangsabschnitt (3c), der sich in dem mindestens einen Heitzkessel (1) befindet, mindestens einen ersten Abschnitt (3a), um Arbeitsfluid von dem mindestens einen Heitzkessel (1) zu einer ersten Anordnung von mindestens einem Turbinenabschnitt (2a) zu leiten, und einen zweiten Abschnitt (3b), um Arbeitsfluid von der ersten Anordnung von mindestens einem Turbinenabschnitt (2a) zu einer zweiten Anordnung von mindestens einem Turbinenabschnitt (2b) zu leiten, umfasst, und
- das Rückerhitzungsmodul (8) mindestens einen stromabwärtigen Wärmetauscher (11) aufweist, der sich an dem zweiten Abschnitt (3b) des Hauptkreislaufs befindet,
wobei der Sekundärkreislauf (9) mindestens einen stromaufwärtigen Wärmetauscher (10) aufweist, der sich in dem Heitzkessel (1) befindet, wobei der stromaufwärtige Wärmetauscher (10) die Übertragung von Wärme aus den Verbrennungsabgasen oder dem Rückerhitzungsfluid auf das in dem Sekundärkreislauf (9) zirkulierende Rückerhitzungsfluid ermöglicht, wobei das Rückerhitzungsfluid in dem Sekundärkreislauf (9) zwischen den stromaufwärtigen (10) und den stromabwärtigen (11) Wärmetauschern zirkuliert,
**dadurch gekennzeichnet, dass** die Anlage so ausgelegt ist, dass das Überhitzungsfluid am Ausgang des stromaufwärts gelegenen Wärmetauschers (10) am Nennlastpunkt auf einem Druckniveau sein kann, das um mindestens zehn Bar höher ist als das Druckniveau am Nennlastpunkt des Arbeitsfluids in dem Speicher (6).

2. Wärmekraftwerk nach dem vorhergehenden Anspruch, wobei die Brennstoffe Abfälle wie Haushaltsabfälle, Abfälle aus wirtschaftlichen Aktivitäten, gefährliche Abfälle, Biomasse, Klärschlamm oder auch medizinische Abfälle umfassen.

3. Wärmekraftwerk nach einem der vorhergehenden Ansprüche, wobei der stromaufwärts gelegene Wärmetauscher (10) ein Wärmetauscher vom konvektiven Typ ist.

4. Wärmekraftwerk nach einem der vorhergehenden Ansprüche, das so konfiguriert ist, dass mindestens 90%, vorzugsweise gesamte Masse des Überhitzungsfluids am Ausgang des stromaufwärts gelegenen Wärmetauschers (10) in den stromabwärts gelegenen Wärmetauscher (11) geleitet wird.

5. Wärmekraftwerk nach einem der vorhergehenden Ansprüche, wobei der Sekundärkreislauf (9) mindestens eine Pumpe (12) umfasst, die so konfiguriert ist, dass sie das Druckniveau des Überhitzungsfluids am Ausgang des vorgeschalteten Wärmetauschers (10) auf ein Niveau bringt, das um mindestens zehn Bar höher ist als das Druckniveau am Nennlastpunkt des Arbeitsfluids in dem Speicher (6).

6. Wärmekraftwerk nach einem der vorhergehenden Ansprüche, bei dem der Sekundärkreislauf (9) von mindestens zwei verschiedenen Quellen mit Überhitzungsfluid versorgt wird, wobei das Druck- und/oder Temperaturniveau der beiden Quellen unterschiedlich ist.

7. Wärmekraftwerk nach einem der vorhergehenden Ansprüche, bei dem der Sekundärkreislauf (9) einen teilweisen oder vollständigen Bypass des vorgeschalteten Wärmetauschers (10) aufweist.

8. Wärmekraftwerk nach einem der Ansprüche 6 oder 7, das außerdem Folgendes umfasst:
- einen ersten Temperatursensor (17) auf dem zweiten Abschnitt des Hauptkreislaufs (3b), stromabwärts des stromabwärts gelegenen Wärmetauschers (11),
- einen Drucksensor (18), der sich am Sekundärkreislauf (9) befindet,
- einen zweiten Temperatursensor (19), der sich im Sekundärkreislauf (9) zwischen dem stromaufwärtigen Wärmetauscher (10) und dem stromabwärtigen Wärmetauscher (11) befindet, und
- ein Regelsystem (16), das mit dem ersten und zweiten Temperatur- (17, 19) und Drucksensor (18) und mit mindestens einem Ventil (15) zur Regelung des Durchflusses einer Überhitzungsfluidquelle des Sekundärkreislaufs oder des Durchflusses des vollständigen oder teilweisen Bypasses des stromaufwärts gelegenen Wärmetauschers (10) verbunden ist.

9. Wärmekraftwerk nach einem der vorhergehenden Ansprüche mit mindestens einem Energiesparer (4), der sich auf dem Anfangsabschnitt (3c) des Hauptkreislaufs befindet, wobei mindestens ein Teil der Zufuhr von Überhitzungsfluid zum Sekundärkreislauf (9) von einem Auslass des Energiesparers (4) und/oder von einem Kondensat- und Speisewasserkreislauf (7) stammt.

10. Wärmekraftwerk nach einem der vorhergehenden Ansprüche mit einem Kondensat- und Speisewasserkreislauf (7), wobei das Kraftwerk so konfiguriert ist, dass das Überhitzungsfluid nach dem stromabwärtigen Wärmetauscher (11), zu dem im Heitzkessel (1) befindlichen Speicher (6) und/oder zu dem Kondensat- und Speisewasserkreislauf (7) geleitet werden kann.

11. Verfahren zur Erzeugung von Elektrizität oder Antriebskraft in einem Wärmekraftwerk, das folgende Schritte umfasst:
- Verbrennung von Brennstoffen oder Wärmerückgewinnung in einem Heizkessel (1),
- in dem Heitzkessel (1), Aufsteigen der Enthalpie eines Arbeitsfluids in einem Hauptkreislauf, wobei der Hauptkreislauf einen Speicher (6) umfasst, wobei sich das Arbeitsfluid in dem Speicher (6) auf einem Hauptdruckniveau befindet, und Aufsteigen der Enthalpie eines Rücküberhitzungsfluids in einem Sekundärkreislauf (9), wobei der Sekundärkreislauf (9) mindestens einen stromaufwärtigen Wärmetauscher (10) umfasst, der sich in dem Heitzkessel (1) befindet, wobei der stromaufwärts gelegene Wärmetauscher (10) die Übertragung von Wärme aus den Verbrennungsabgasen oder dem Rückerhitzungsfluid auf das im Sekundärkreislauf (9) zirkulierende Rücküberhitzungsfluid ermöglicht, wobei sich das Rücküberhitzungsfluid am Ausgang des stromaufwärts gelegenen Wärmetauschers (10) auf einem sekundären Druckniveau befindet, wobei das sekundäre Druckniveau um mindestens zehn Bar höher ist als das primäre Druckniveau,
- Senden des Arbeitsfluids in eine erste Anordnung von mindestens einem Turbinenabschnitt (2a),
- Senden des Arbeitsfluids aus der ersten Anordnung von mindestens einem Turbinenabschnitt (2a) zu mindestens einem stromabwärtigen Wärmetauscher (11) eines Rückerwärmungsmoduls (8) und Senden des Rückerwärmungsfluids aus dem stromaufwärtigen Wärmetauscher (10) zu dem stromabwärtigen Wärmetauscher (11),
- Übertragen von Wärme von dem Nacherwärmungsfluid auf das Arbeitsfluid in dem stromabwärtigen Wärmetauscher (11),
- Senden des Arbeitsfluids von dem stromabwärtigen Wärmetauscher (11) zu einer zweiten Anordnung von mindestens einem Turbinenabschnitt (2b).

12. Verfahren nach dem vorhergehenden Anspruch, bei dem mindestens 90%, vorzugsweise gesamte Masse des Rückerhitzungsfluids am Ausgang des stromaufwärtigen Wärmetauschers (10) in den stromabwärtigen Wärmetauscher (11) geleitet wird.

13. Verfahren nach einem der Ansprüche 11 bis 12, wobei der stromaufwärtige Wärmetauscher (10) ein Wärmetauscher vom konvektiven Typ ist.

14. Verfahren zur Erzeugung von Elektrizität oder Antriebskraft nach einem der Ansprüche 11 bis 13, wobei die Brennstoffe Abfälle wie Haushaltsabfälle, Abfälle aus wirtschaftlichen Aktivitäten, gefährliche Abfälle, Biomasse, Klärschlamm oder auch medizinische Abfälle umfassen, wobei das primäre Druckniveau zwischen 20 und 85 bar liegt und das sekundäre Druckniveau über 70 bar liegt.

15. Verfahren zur Erzeugung von Elektrizität oder Antriebskraft nach einem der Ansprüche 11 bis 14, wobei das in dem Sekundärkreislauf (9) zwischen dem stromaufwärts gelegenen Wärmetauscher (10) und dem stromabwärts gelegenen Wärmetauscher (11) zirkulierende Überhitzungsfluid in flüssigem Zustand ist.

## Claims

1. Thermal power plant for producing electricity or motive power, comprising at least one fuel or heat recovery boiler (1), at least one turbine, at least one main circuit for circulating a working fluid, at least one drum (6) located in the boiler (1) on said main circuit, at least one reheating module (8) and at least one secondary circuit (9) in which a reheating fluid circulates, wherein:
- said main circuit comprises at least one initial stretch (3c) located in said at least one boiler (1), at least one first stretch (3a) for sending working fluid from said at least one boiler (1) to a first set of at least one turbine section (2a), and a second stretch (3b) for sending working fluid from said first set of at least one turbine section (2a) to a second set of at least one turbine section (2b), and
- said reheating module (8) comprises at least one downstream heat exchanger (11) located on the second stretch (3b) of the main circuit,
where said secondary circuit (9) comprises at least one upstream heat exchanger (10) located in said boiler (1), the upstream heat exchanger (10) enabling heat to be transferred from combustion fumes or recovery fluid to the reheating fluid circulating in the secondary circuit (9), said reheating fluid circulating in said secondary circuit (9) between the upstream (10) and downstream heat exchangers (11),
**characterized in that** said plant is designed so that the reheating fluid can be, at the outlet of the upstream heat exchanger (10), at the nominal load point, at a pressure level at least ten bars higher than the pressure level at the nominal load point of the working fluid in said drum (6).

2. Thermal power plant according to the preceding claim, wherein the said fuels comprise waste such as household waste, waste from economic activities, hazardous waste, biomass, sewage sludge or medical waste.

3. Thermal power plant according to one of the preceding claims, wherein the upstream heat exchanger (10) is a convective-type exchanger.

4. Thermal power plant according to one of the preceding claims, configured so that at least 90%, preferably all, of the mass of reheating fluid leaving the upstream heat exchanger (10) is sent to the downstream exchanger (11).

5. Thermal power plant according to one of the preceding claims, wherein said secondary circuit (9) comprises at least one pump (12) configured to bring the pressure level of the reheating fluid, at the outlet of the upstream heat exchanger (10), to a level at least ten bars higher than the pressure level at the nominal charge point of the working fluid in said drum (6).

6. Thermal power plant according to one of the preceding claims, in which said secondary circuit (9) is supplied with reheating fluid by at least two distinct sources, the pressure and/or temperature level of the two sources being different.

7. Thermal power plant according to one of the preceding claims, in which the secondary circuit (9) comprises a partial or total bypass of the upstream heat exchanger (10).

8. Thermal power plant according to one of claims 6 or 7 further comprising :
- a first temperature sensor (17) on the second stretch of the main circuit (3b), downstream of the downstream heat exchanger (11),
- a pressure sensor (18), located on the secondary circuit (9),
- a second temperature sensor (19), located in the secondary circuit (9) between the upstream heat exchanger (10) and the downstream heat exchanger (11), and
- a control system (16) connected to the first and second temperature (17, 19) and pressure (18) sensors, and to at least one valve (15) for controlling the flow rate of a source of the secondary circuit reheating fluid or the flow rate of the partial or total bypass of the upstream heat exchanger (10).

9. Thermal power plant according to one of the preceding claims comprising at least one economizer (4) located on the initial stretch (3c) of the main circuit, at least part of the reheating fluid supply to the secondary circuit (9) coming from an outlet of said economizer (4) and/or from a condensate and feedwater circuit (7).

10. Thermal power plant according to one of the preceding claims, comprising a condensate and feedwater circuit (7), said power plant being configured so that the reheating fluid can be sent, after the downstream heat exchanger (11), to said drum (6) located in the boiler (1) and/or to said condensate and feedwater circuit (7).

11. Method for generating electricity or motive power in a thermal power plant, comprising the following steps:
- fuel combustion or heat recovery in a boiler (1),
- in said boiler (1), enthalpy rise of a working fluid in a main circuit, said main circuit comprising a drum (6), said working fluid being in said drum (6) at a main pressure level, and enthalpy rise of a reheating fluid in a secondary circuit (9), said secondary circuit (9) comprising at least one upstream heat exchanger (10) located in the boiler (1), the upstream heat exchanger (10) enabling heat to be transferred from combustion fumes or recovery fluid to the reheating fluid circulating in the secondary circuit (9), said reheating fluid being at a secondary pressure level at the outlet of said upstream heat exchanger (10), said secondary pressure level being at least ten bars higher than said main pressure level,
- delivery of said working fluid to a first set of at least one turbine section (2a),
- sending said working fluid from said first set of at least one turbine section (2a) to at least one downstream heat exchanger (11) of a reheater module (8), and sending said reheating fluid from the upstream heat exchanger (10) to said downstream heat exchanger (11),
- heat transfer from said reheating fluid to said working fluid in said downstream heat exchanger (11),
- sending said working fluid from said downstream heat exchanger (11) to a second set of at least one turbine section (2b).

12. Method according to the preceding claim, in which at least 90%, preferably all, of the reheating fluid mass leaving the upstream heat exchanger (10) is sent to the downstream heat exchanger (11).

13. Method according to one of claims 11 to 12, in which the upstream heat exchanger (10) is a convective-type exchanger.

14. Method for producing electricity or motive power according to one of claims 11 to 13, wherein said fuels comprise waste such as household waste, waste from economic activities, hazardous waste, biomass, sewage sludge or medical waste, said primary pressure level being between 20 and 85 bar, and said secondary pressure level being greater than 70 bar.

15. Method for producing electricity or motive power according to one of claims 11 to 14, in which said reheating fluid circulating in said secondary circuit (9) between said upstream heat exchanger (10) and said downstream exchanger (11) is in the liquid state.
